# EUROPÄISCHE PATENTANMELDUNG

(11) **EP 4 749 844 A1**
(43) Veröffentlichungstag der Anmeldung: **27.05.2026**
(21) Anmeldenummer: 25217763.9
(22) Anmeldetag: 21.11.2025
(51) Int. Cl.: H02B 1/06, H02B 1/21

(54) **ANORDNUNG ZUM BEFESTIGEN AN STROMSCHIENEN EINER ANLAGE ZUM VERTEILEN UND/ODER WANDELN VON ELEKTRISCHER ENERGIE UND EINE ANLAGE MIT EINER SOLCHEN ANORDNUNG**

(30) Priorität: 21.11.2024 DE 102024134312
(71) Anmelder: bopla Gehäuse Systeme GmbH, 32257 Bünde (DE); E.ON Grid Solutions GmbH, 20537 Hamburg (DE)
(72) Erfinder: DRÖGEMÜLLER, Malte, 20255 Hamburg (DE); SCHRÖDER, Thomas, 22177 Hamburg (DE); HIILBERS, David, 19071 Dalberg (DE); RANSIEK, Malte, 32257 Bünde (DE)
(74) Vertreter: Keller Schneider Patentanwaltsgesellschaft mbH

(57) **Zusammenfassung**

Die vorliegende Anmeldung betrifft eine Anordnung (1) zum Befestigen an mindestens einer Stromschiene (4) einer Anlage (100) zum Verteilen und/oder Wandeln von elektrischer Energie. Die Anordnung (1) umfasst mindestens eine Gehäuseeinheit (6), die mit der mindestens einen Stromschiene (4) der Anlage (100) verbindbar ist, und einen Fingerschutz (22), der zwischen der mindestens einen Stromschiene (4) und der Gehäuseeinheit (6) angeordnet ist. Der Fingerschutz (22) ist zwischen einer Montageposition und einer Schutzposition, insbesondere zumindest im Wesentlichen in einer vertikalen Richtung (V), überführbar ausgebildet und verhindert in der Schutzposition einen Kontakt der mindestens einen Stromschiene (4).

## Beschreibung

Die vorliegende Erfindung betrifft eine Anordnung zum Befestigen an Stromschienen einer Anlage zum Verteilen und/oder Wandeln von elektrischer Energie und eine Anlage mit einer solchen Anordnung.

In Anlagen zur Stromverteilung und/oder Stromwandlung, wie sie beispielsweise in Transformatorenstationen eingesetzt werden, sind Stromverteiler- und/oder Stromsammelschienen verwendet, von denen mehrere in einer gemeinsamen vertikalen Ebene und in horizontaler Richtung ausgerichtet übereinander mit Abständen zueinander an einer Wand angeordnet sind. Um auf die Stromschienen Gehäuse zu montieren, in die elektrische und/oder elektronische Komponenten eingebaut sind, werden in einem ersten Arbeitsschritt ein oder mehrere Träger an den Stromverteilerschienen oder Gehäusen festgeschraubt. In einem zweiten Arbeitsschritt werden dann die Gehäuse auf die Stromschienen geschraubt. Nach dem zweiten Arbeitsschritt müssen dann die Gehäuse in einem dritten Arbeitsschritt mit einem Deckel geschlossen und verplombt werden. Ein Beispiel für eine solche Anlage findet sich in der Schrift DE 10 2009 045 121 A1.

Die herkömmliche Methode zur Erstellung einer Anlage zur Stromverteilung ist sehr arbeitsaufwändig. Sie erfordert eine mindestens zweimalige Verschraubung von Komponenten. Dabei hat sich die Verschraubung des Gehäuses mit den Stromverteilerschienen als besonders mühsam herausgestellt, weil das Gehäuse wegen eventueller bereits eingebauter elektrischer Komponenten schwer zu heben und während der Verschraubung zu halten sein kann. Es muss aber gleichwohl so lange gehalten werden, bis das Gehäuse an den dahinter befindlichen Schienen festgeschraubt ist. Die Verschraubung erfolgt dabei mit Schrauben, die vom Innenraum des Gehäuses her durch die Rückwand des Gehäuses nach außen geführt sind und in Gewinde eingeschraubt werden müssen, die sich hinter der Rückwand im oder am Träger befinden. Die Gewindelöcher sind dadurch für die Montageperson nur schlecht sichtbar, was die Montage erschwert.

Da es bei der Montage des Gehäuses in der Anlage erforderlich ist, in den Innenraum des Gehäuses hineinreichen zu können, ist es nicht möglich, das Gehäuse mit komplett eingebauten elektrischen und/oder elektronischen Komponenten und einem bereits fertig montierten Deckel an der Baustelle anzuliefern.

Der Deckel kann vielmehr erst auf das Gehäuse aufgesetzt werden, nachdem das Gehäuse an dem Träger befestigt worden ist. Eine Verplombung des Gehäuses ist deshalb auch erst nach der Montage des Deckels möglich. Gleichzeitig muss mittels einer zusätzlich im Gehäuse anzubringenden elektrisch isolierenden Schutzkappe jede mit einer Stromverteilerschiene verbundene Schraube in dem Gehäuse abgedeckt werden, was den Montageaufwand zusätzlich erhöht. Auch wird hierüber der verfügbare Platz in dem Gehäuse stark eingeschränkt. Auch das Risiko der Beschädigung der elektrischen und/oder elektronischen Komponenten in dem Innenraum des Gehäuses steigt dadurch an. Auch besteht eine Gefahr dahingehend, dass eine Montage- und/oder Wartungsperson die Stromschienen der Anlage bei der Montage und/oder Demontage des Gehäuses versehentlich kontaktiert.

Es ist die Aufgabe der vorliegenden Erfindung, eine Anordnung und eine Anlage zu schaffen, welche die Probleme und Nachteile des Standes der Technik zumindest teilweise behebt. Insbesondere ist es eine Aufgabe der Erfindung, eine kompakte Anordnung anzugeben, die einfach und sicher zu montieren und auszutauschen ist. Insbesondere ist es eine Aufgabe der Erfindung die Arbeitssicherheit bei Montage-, Reparatur- und/oder Instandhaltungs-, und/oder Austauscharbeiten zu verbessern.

Erfindungsgemäß wird die Aufgabe durch eine Anordnung gemäß dem Gegenstand von Anspruch 1, sowie durch eine Anlage gemäß dem Gegenstand von Anspruch 11 gelöst. Vorteilhafte Weiterbildungen sind den Unteransprüchen zu entnehmen.

Insbesondere wird die der Erfindung zugrundeliegende Aufgabe durch eine Anordnung zum Befestigen an mindestens einer Stromschiene einer Anlage zum Verteilen und/oder Wandeln von elektrischer Energie gelöst. Die Anordnung umfasst mindestens eine Gehäuseeinheit, die mit der mindestens einen Stromschiene der Anlage verbindbar ist, und einen Fingerschutz, der zwischen der mindestens einen Stromschiene und der Gehäuseeinheit angeordnet ist. Der Fingerschutz ist zwischen einer Montageposition und einer Schutzposition, insbesondere zumindest im Wesentlichen in einer vertikalen Richtung, überführbar ausgebildet und verhindert in der Schutzposition einen Kontakt der mindestens einen Stromschiene.

Die Vorteile der Erfindung liegen auf der Hand. Insbesondere ist es möglich eine kompakte Anordnung bereitzustellen, die hinsichtlich ihrer Montierbarkeit und der Montiersicherheit optimiert ist. Der zwischen der Stromschiene und der Gehäuseeinheit angeordnete Fingerschutz sorgt dafür, dass ein Monteur oder eine Wartungsperson die Stromschiene der Anlage während der Montage, Wartung und/oder Instandhaltung und/oder Austausch der Anordnung nicht versehentlich kontaktiert. Dies erhöht die Arbeitssicherheit.

Der Fingerschutz kann dabei als eine zumindest im Wesentlichen flache Platte ausgestaltet sein, die die mindestens eine Stromschiene abdeckt und in der Schutzposition verhindern soll, dass eine Montage- oder Wartungsperson, die die Montage- oder Wartungs- oder Reparaturarbeiten an der Anlage ausführt, versehentlich die Stromschiene berührt.

Erfindungsgemäß ist der Fingerschutz von einer Montageposition in eine Schutzposition überführbar ausgebildet. Mit anderen Worten, der Fingerschutz kann von der Montageposition in die Schutzposition bewegt, insbesondere verschoben werden.

In der Schutzposition verhindert der Fingerschutz einen Kontakt der Stromschienen. Ein solcher Kontakt kann hierbei insbesondere durch einen Spalt zwischen der Oberseite der Gehäuseeinheit und einer in der vertikalen Richtung oberhalb der Gehäuseeinheit angeordneten Komponente erfolgen. Bei der in der vertikalen Richtung oberhalb der Gehäuseeinheit angeordneten Komponente kann es sich um einen Abschnitt des Anlagengehäuses, eine weitere in dem Anlagengehäuse angeordnete Komponente oder eine weitere Gehäuseeinheit handeln.

In der Montageposition kann dieser Spalt zumindest bereichsweise freiliegen. Mit anderen Worten, zumindest ein Bereich oberhalb der Anordnung kann in der Montageposition des Fingerschutzes nicht von dem Fingerschutz überdeckt sein.

Insbesondere kann dieser Spalt von Anlage zu Anlage und/oder in Abhängigkeit der eingesetzten Gehäuseeinheit unterschiedlich groß ausgebildet sein. Um die Größenänderung des Spalts kompensieren zu können, ist der Fingerschutz verschieblich ausgebildet. So kann der Fingerschutz vorteilhafterweise flexibel an den verfügbaren Einbauraum und die darin angebrachten Gehäuseeinheit angepasst werden. Mit anderen Worten, der Fingerschutz eignet sich insbesondere zum Einsatz in unterschiedlichen Anlagen mit variierenden Abmessungen oder in Verbindung mit Bausätzen mit unterschiedlich großen Gehäuseeinheiten. Es muss also nicht ein zu der Anlage und/oder der Gehäuseeinheit abgestimmter und zugeordneter Fingerschutz bereitgestellt und ausgewählt werden. Vielmehr ist der Fingerschutz aufgrund der Verschieblichkeit auf verschiedene Einsatzbedingungen anpassbar und flexibel.

Gemäß einem weiteren Aspekt der erfindungsgemäßen Anordnung kann der Fingerschutz an einem in der Montageposition oberen Endbereich eine Ausnehmung, insbesondere Kerbe, aufweisen, in welche ein Werkzeug eingreift zum Überführen des Fingerschutzes von der Montageposition in die Schutzposition. Über die Ausnehmung kann der Fingerschutz mittels eines in die, insbesondere nicht-durchgängig ausgebildete, Ausnehmung eingreifendes Werkzeug von der Montageposition in die Schutzposition überführt, und beispielsweise während eines Befestigungsvorgangs eines Montageelements an der zumindest einer Stromschiene gehalten werden. Anschließend kann das Werkzeug gelöst werden. Der Fingerschutz wird dann kraftschlüssig in der Schutzposition gehalten. Die Verschiebung kann somit einhändig und einfach mittels des in die Ausnehmung eingreifenden Werkzeugs erfolgen. Dies erleichtert die Montage.

Gemäß einem weiteren Aspekt einer solchen Anordnung kann die Ausnehmung einen Boden aufweist, wobei die Ausnehmung insbesondere nicht durchgängig durch den Fingerschutz ausgebildet ist. Die nicht-durchgängige Ausgestaltung der Ausnehmung verhindert einen versehentlichen Kontakt des Werkzeugs mit der mindestens einen Stromschiene. So kann die Arbeitssicherheit weiter verbessert werden.

Gemäß einem weiteren Aspekt der erfindungsgemäßen Anordnung kann der Fingerschutz eine der Anzahl der mindestens einen Stromschiene oder einem Vielfachen der Anzahl der mindestens einen Stromschiene entsprechende Anzahl an Langlöchern aufweisen. Somit kann die Verschieblichkeit des Fingerschutzes einfach und sicher ermöglicht werden. Insbesondere kann der Fingerschutz entlang der Langlöcher von der Montageposition in die Schutzposition, insbesondere in der vertikalen Richtung, verschiebbar ausgeführt sein.

Gemäß einem weiteren Aspekt der erfindungsgemäßen Anordnung kann der Fingerschutz Ausnehmungen aufweisen, wobei die Ausnehmungen, insbesondere neben den Langlöchern, vorzugsweise symmetrisch entlang der vertikalen Richtung neben den Langlöchern, ausgebildet sind. Mit anderen Worten, auf einer oder beiden Seiten der Langlöcher können zusätzliche Ausnehmungen angeordnet sein. Diese sind dazu vorgesehen, Platz für weitere Elemente, wie beispielsweise Befestigungselemente der Stromschienen an dem Anlagengehäuse, zu schaffen. Insbesondere ist das Gehäuseeinheit und die darin eingebauten elektrischen und/oder elektronischen Komponenten elektrisch von den Stromschienen isoliert. Die Stromschienen dienen lediglich der Befestigung der Anordnung in der Anlage.

Gemäß einem weiteren Aspekt der erfindungsgemäßen Anordnung können dem Fingerschutz zwei oder mehr Gehäuseeinheiten zugeordnet sein, wobei die zwei oder mehr Gehäuseeinheiten parallel zueinander oder in der vertikalen Richtung fluchtend angeordnet sind. So kann die schützende Eigenschaft des Fingerschutzes für zwei oder mehrere Gehäuseeinheiten vorgesehen werden, wodurch sich die Komplexität der Anordnungen reduzieren lässt. Dies führt auch zu einer einfacheren Montage, Wartung und/oder Instandhaltung der Anlage, und/oder Austausch von Gehäuseeinheiten.

Gemäß einem weiteren Aspekt der erfindungsgemäßen Anordnung kann der Fingerschutz einen elektrisch isolierenden Kunststoff, eine elektrisch isolierende Kunststoffmischung und/oder ein elektrisch isolierendes Keramikmaterial umfassen oder daraus bestehen. So können elektrische und/oder elektronische Komponenten, welche in einem Innenraum der mindestens einen Gehäuseeinheit angeordnet sind, vor Spannungsüberschlägen und/oder Kriechströmen noch zuverlässiger geschützt werden.

Gemäß einem weiteren Aspekt der erfindungsgemäßen Anordnung kann zwischen dem Fingerschutz und der mindestens einen Gehäuseeinheit mindestens ein, insbesondere mindestens ein jeweils einer Gehäuseeinheit zugeordnetes, Montageelement angeordnet sein, wobei der Fingerschutz mittels des mindestens einen Montageelements an der mindestens einen Stromschiene befestigbar ist, und wobei die mindestens eine Gehäuseeinheit werkzeuglos mit dem mindestens einen Montageelement verbindbar oder verbunden ist.

Insbesondere lässt sich die Gehäuseeinheit als Ganzes einfach ohne Werkzeug an dem Montageelement befestigen. Dadurch kann eine gekapselte Gehäuseeinheit bereitgestellt werden, die manipulationssicherer gestaltet werden kann. Ferner ist es möglich, eine bereits verplombte und mit elektrischen und/oder elektronischen Komponenten bestückte Gehäuseeinheit anzuliefern und einzubauen. Dies erleichtert auch die Reparatur und/oder Instandhaltungsarbeiten und reduziert somit Ausfallzeiten, da die Gehäuseeinheit als Ganzes abgenommen und ausgetauscht werden kann. Dadurch können auch Anwendungsfehler verhindert werden, da ein Öffnen der Gehäuseeinheit zur Montage und/oder Demontage entfällt.

Durch die elektrische Isolation zwischen der Gehäuseeinheit und der Stromschienen können die in der Gehäuseeinheit angeordneten elektrischen und/oder elektronischen Komponenten insbesondere vor der Spannung der Stromschienen geschützt werden. Die Ausfallsicherung und die Zuverlässigkeit der Anordnung wird somit verbessert.

Das Montageelement kann dabei zumindest im Wesentlichen als eine Profilleiste oder als Rahmen ausgeführt sein. Das Montageelement kann aus einem Kunststoff oder einem keramischen Material hergestellt sein, welche elektrisch isolierend wirken.

Das Montageelement kann fest mit der mindestens einen Stromschiene verbunden sein, beispielsweise über eine Verschraubung.

Für den Einbau von mehreren Gehäuseeinheiten in eine Anlage können mehrere Montageelemente verwendet werden, die in einem Abstand zueinander in einer parallelen oder fluchtenden Ausrichtung angeordnet sind. Da ein Montageelement leicht und kompakt ist, bereitet dessen Montage an der mindestens einen Stromschiene keine großen Schwierigkeiten. Insbesondere dient die mindestens eine Stromschiene ausschließlich der Befestigung der Anordnung. Eine direkte Strom- und/oder Spannungsversorgung durch die mindestens eine Stromschiene ins Innere der Gehäuseeinheit ist nicht vorgesehen.

Gemäß einem weiteren Aspekt einer solchen Anordnung kann die Gehäuseeinheit über eine erste Paarung von zusammenwirkenden Befestigungselementen hängend und über eine zweite Paarung von als Clips-, Klemm-, Schnapp-, Riegel- oder Rastverbindungzusammenwirkenden Befestigungselementen mit dem Montageelement verbunden sein.

Somit kann die mindestens eine Gehäuseeinheit mit dem Montageelement über eine besondere Befestigungstechnik verbunden werden. Die Befestigung erfolgt über die erste Paarung von zusammenwirkenden Befestigungselementen hängend und über die zweite Paarung von als Clips-, Klemm-, Schnapp-, Riegel- oder Rastverbindung zusammenwirkenden Befestigungselementen.

Bei der ersten Paarung von zusammenwirkenden Befestigungselementen sind diese so ausgestaltet, dass ein gehäuseeinheitsseitiges Befestigungselement auf einem montageelementseitigen Befestigungselement über passend zueinander geformte und räumlich zueinander passend angeordnete Kontaktflächen aufliegt. Das oder die gehäuseeinheitsseitigen Befestigungselemente werden zumindest teilweise über das Gewicht der Gehäuseeinheit, das über das gehäuseeinheitsseitige Befestigungselement auf die Kontaktflächen des montageelementseitigen Befestigungselements einwirkt, in ihrer Einbaulage, insbesondere form- und/oder reibschlüssig, aufeinander gehalten. Das montageelementseitige Befestigungselement ist dabei fest mit dem Montageelement und das gehäuseeinheitsseitige Befestigungselement ist fest mit der Gehäuseeinheit, insbesondere dem Bodenelement der Gehäuseeinheit, verbunden.

Die zur ersten Paarung von zusammenwirkenden Befestigungselementen zählenden Bauteile können zudem von ihrer Form her so gestaltet sein, dass sie zusätzlich auch so miteinander verbunden sind, dass die Befestigungselemente eine Trennung der Gehäuseeinheit vom Montageelement in zumindest einer Dimension formschlüssig sperren. So können die Befestigungselemente über ihre Form beispielsweise ein Abziehen der Gehäuseeinheit entlang Tiefenrichtung, d.h. einer Normalen des Montageelements, bzw. einer Normalen der gemeinsamen vertikalen Ebenen der ersten und zweiten Paarung von zusammenwirkenden Befestigungselementen, weg von dem Montageelement sperren. Die Befestigungselemente können über ihre Form auch eine Querverschiebung der Gehäuseeinheit in der horizontalen Richtung, d.h. in Erstreckungsrichtung der Stromschienen, sperren. Die Befestigungselemente der ersten Paarung können allerdings so ausgebildet sein, dass sie ein Abheben der Gehäuseeinheit vom Montageelement in der vertikalen Richtung zulassen.

Der Abhebevorgang erfolgt über zwei Schritte. In einem ersten Demontageschritt wird die Gehäuseeinheit zumindest im Wesentlichen in der vertikalen Richtung nach oben verschoben. Dies löst den Formschluss der ersten Paarung von zusammenwirkenden Befestigungselementen. Dann wird in einem zweiten Demontageschritt die Gehäuseeinheit zumindest im Wesentlichen in der Tiefenrichtung von dem Montageelement gelöst, insbesondere durch eine Schwenk- und/oder Drehbewegung, wodurch die erste Paarung an zusammenwirkenden Befestigungselementen außer Eingriff gelangt und auch die zweite Paarung an zusammenwirkenden Befestigungselementen gelöst werden kann.

Die zweite Paarung von zusammenwirkenden Befestigungselementen ist als eine Clips-, Klemm-, Schnapp-, Riegel- oder Rastverbindung ausgebildet. Durch die zweite Paarung von zusammenwirkenden Befestigungselementen werden die Gehäuseeinheit und das Montageelement in einer räumlichen Lage zueinander gehalten. Auch bei der zweiten Paarung von zusammenwirkenden Befestigungselementen ist eines fest mit dem Montageelement und das andere fest mit der Gehäuseeinheit verbunden. Die Befestigungselemente der zweiten Paarung sind von ihrer Form her so gestaltet, dass sie in ihrer verbindenden Stellung durch zueinander wirkungs-komplementär geformte Bauteile die Beweglichkeit der Gehäuseeinheit relativ zum Montageelement form- und/oder kraftschlüssig blockieren. Diese Blockierung kann bei Bedarf allerdings aufgehoben werden, beispielsweise während einer Demontage. Insbesondere ermöglicht die zweite Paarung an zusammenwirkenden Befestigungselementen durch federnde, resiliente und/oder kompensierende Eigenschaften von einem oder beiden der Befestigungselemente der zweiten Paarung, dass die Gehäuseeinheit in dem ersten Demontageschritt zumindest im Wesentlichen in der vertikalen Richtung nach oben verschoben werden kann, wodurch sich der Formschluss der ersten Paarung lösen lässt. Somit wird ermöglicht, dass die Gehäuseeinheit auch leicht wieder von dem Montageelement getrennt werden kann. Die Clips-, Klemm-, Schnapp-, Riegel- oder Rastverbindung kann insbesondere so ausgestaltet sein, dass sie werkzeuglos hergestellt wird und auch werkzeuglos wieder aufhebbar ist.

Anstelle einer aus dem Stand der Technik bekannten doppelten Verschraubung - des Trägers mit den Stromschienen und des Gehäuses mit dem Träger - kann mit der erfindungsgemäßen Befestigungstechnik zumindest auf eine der beiden Verschraubungen bei der Montage der Gehäuseeinheit verzichtet werden. Eine Verbindung der Gehäuseeinheit mit dem Montageelement kann mit den ersten und zweiten Paarungen von zusammenwirkenden Befestigungselementen werkzeuglos hergestellt werden, indem die Gehäuseeinheit in einem ersten Montageschritt am Montageelement aufgehängt und danach in einem zweiten Montageschritt mit einer Aufsetzbewegung, insbesondere einer Schwenk- oder Drehbewegung, des noch frei beweglichen Endes der Gehäuseeinheit mit dem Montageelement über die Clips-, Klemm-, Schnapp-, Riegel- oder Rastverbindung verclipst, verklemmt, eingeschnappt, verriegelt oder verrastet wird. Zur Herstellung der Verbindung der Befestigungselemente der zweiten Paarung miteinander kann ein leichter Druck auf die Gehäuseeinheit im Bereich der zur zweiten Paarung gehörenden Befestigungselemente ausreichen. Eine solche Verbindung der Gehäuseeinheit mit dem Montageelement ist erheblich einfacher herstellbar als die herkömmliche Schraubverbindung des Gehäuses mit dem Träger, weil die Gehäuseeinheit nicht mehr lange fluchtend zu einem Schraubkanal gehalten werden muss und die Verbindung werkzeuglos und ohne den Einsatz von separaten Verbindungshilfsmitteln, wie beispielsweise Schrauben, herstellbar ist.

Ein weiterer Vorteil der erfindungsgemäßen Verbindungstechnik ist darin zu sehen, dass die Gehäuseeinheit in einem geschlossenen, insbesondere gekapselten, Zustand montiert werden kann. Der Innerraum der Gehäuseeinheit kann also in einer Fabrik mit sämtlichen Bauteilen und/oder elektrischen und/oder elektronischen Komponenten bestückt werden, die für dessen bestimmungsgemäßer Nutzung erforderlich sind, und die Gehäuseeinheit kann danach noch in der Fabrik mit einem Abdeckungselement versehen und verplombt werden. Ein Eingriff in die Gehäuseeinheit am Montageort der Anlage ist mit der erfindungsgemäßen Verbindungstechnik nicht mehr erforderlich. Am Montageort ist es auch nicht mehr erforderlich, das Abdeckungselement zu montieren und die Gehäuseeinheit zu verplomben, wodurch die Montage erheblich vereinfacht und beschleunigt wird.

Mit der vorgeschlagenen Verbindungstechnik können beliebig viele Gehäuseeinheiten nebeneinander oder auch über- bzw. untereinander in einer Anlage mit Stromschienen verbaut sein, wenn zuvor eine ausreichende Zahl von Montageelementen auf die Stromschienen aufgesetzt worden sind oder ein Montageelement eine ausreichende Anzahl an montageelementseitigen Befestigungselementen der ersten Paarung und zweiten Paarung umfasst. Ein Hersteller kann Gehäuseeinheiten mit verschiedenen Abmessungen in einem Baukasten vorhalten, sodass ein Anwender sich für seinen Anwendungsfall passende Gehäuseeinheit aus dem Baukasten für seine Anlage aussuchen kann.

Die erste Paarung von zusammenwirkenden Befestigungselementen kann in einer ersten Ebene oberhalb einer zweiten Ebene der zweiten Paarung von zusammenwirkenden Befestigungselementen angeordnet sein. Die Montage der Gehäuseeinheit kann vereinfacht werden, wenn die Gehäuseeinheit mit ihrem oberen Abschnitt zunächst am Montageelement eingehängt wird und die Gehäuseeinheit erst danach über die zweite Paarung von zusammenwirkenden Befestigungselementen, die sich in einem Abschnitt Bereich der Gehäuseeinheit befinden, mit dem Montageelement verbunden wird. Durch die in unterschiedlichen Höhen angeordneten Befestigungselemente ergibt sich eine gute und sichere Befestigung der Gehäuseeinheit am Montageelement. Insbesondere kann die Gehäuseeinheit über ihre Bauhöhe hinweg an verschiedenen Stellen am Montageelement gehalten werden.

Die beiden Paarungen von zusammenwirkenden Befestigungselementen können sich insbesondere in der gemeinsamen vertikalen Ebene befinden. Durch diese Anordnung kann das Bodenelement der Gehäuseeinheit plan oder nahezu plan ausgestaltet sein. Der verfügbare Bauraum in der Anlage wird dadurch optimal ausgenutzt.

Das Montageelement und/oder die Gehäuseeinheit können insbesondere aus einem elektrisch isolierenden Material hergestellt sein. Das elektrisch isolierende, d.h. elektrisch nicht leitende Material, kann Kunststoff umfassen. Somit können die in der Gehäuseeinheit eingebauten elektrischen und/oder elektronischen Bauteile elektrisch isoliert und besser gegen Kriechströme und/oder Spannungsüberschläge geschützt werden.

Erste und zweite Montageebenen, über die die ersten und zweiten Paarungen von zusammenwirkenden Befestigungselementen miteinander in Eingriff kommen, können voneinander abweichen. Aus der räumlichen Lage der verschiedenen Montageebenen ergibt sich hieraus eine zwangsläufige Abfolge der einzelnen Montage- und Demontageschritte.

Nach einer Ausgestaltung der Erfindung ist die erste Montageebene, in der die erste Paarung von zusammenwirkenden Befestigungselementen miteinander in Eingriff steht, in einer zumindest überwiegend vertikalen räumlichen Lage und die zweite Montageebene, in der die zweite Paarung von zusammenwirkenden Befestigungselementen miteinander in Eingriff steht, in einer zumindest annähernd horizontalen räumlichen Lage ausgerichtet. Die zweite Montageebene umfasst dabei auch eine Schwenk- und/oder Drehbewegung in der zweiten Montageebene. Bei einer hängenden Verbindung der Gehäuseeinheit mit dem Montageelement werden die zusammenwirkenden Befestigungselemente der ersten Paarung über eine Einhängebewegung in eine zumindest überwiegend vertikale Richtung miteinander in Eingriff gebracht. Die Richtung der Einhängebewegung entspricht der Montageebene der ersten Paarung. Die Befestigungselemente der zweiten Paarung werden in einer zumindest annähernd horizontalen Tiefenrichtung aufeinander zu bewegt, insbesondere geschwenkt und/oder gedreht, um diese Befestigungselemente miteinander in Eingriff zu bringen. Die zumindest annähernd horizontale Tiefenrichtung, in der die Befestigungselemente der zweiten Paarung bei Ihrer Verbindung miteinander aufeinander zu bewegt werden, entspricht der Montageebene der zweiten Paarung. Je nachdem, welche Befestigungselemente für die zweite Paarung verwendet sind, kann es erforderlich sein, eines der Befestigungselemente zu entsperren, beispielsweise, in dem es so weit eingedrückt wird, dass die von ihm bewirkte Sperre aufgehoben wird. Bei einer Demontage der Gehäuseeinheit kann die Gehäuseeinheit zunächst in der vertikalen Richtung nach oben bewegt werden, wodurch ein Formschluss der ersten Paarung gelöst werden kann. Die Verschiebung der Gehäuseeinheit wird durch die federnden, resilienten und/oder ausgleichenden Eigenschaften der Befestigungselemente der zweiten Paarung ermöglicht. Dann wird die erste Paarung durch eine Bewegung der Gehäuseeinheit in der zumindest annähernd horizontalen Tiefenrichtung, insbesondere einer Schwenkbewegung und/oder Drehbewegung, aufgehoben. Indem die Montageebenen der ersten und zweiten Paarungen von Befestigungselementen voneinander abweichen, blockieren diese eine unerwünschte Montage- oder Demontageabfolge. Im beschriebenen Ausführungsbeispiel kann die Verbindung der zweiten Paarung von Befestigungselementen erst hergestellt werden, nachdem die Befestigungselemente der ersten Paarung miteinander in Eingriff gebracht worden sind, also das Gehäuseeinheit am Montageelement aufgehängt worden ist. Umgekehrt kann das Gehäuseeinheit zur Demontage vom Montageelement erst abgehoben werden, nachdem die federnden, resilienten und/oder ausgleichenden Eigenschaften der zweiten Paarung die formschlüssige Sperrung der ersten Paarung aufgehoben hat. Durch diese Bewegungsabfolge wird sichergestellt, dass die Gehäuseeinheit nicht allzu leicht und möglicherweise ungewollt vom Montageelement demontiert werden kann.

Gemäß einem weiteren Aspekt der erfindungsgemäßen Anordnung kann der Fingerschutz zumindest im Wesentlichen die Form einer rechteckigen Platte aufweist. Dies ermöglicht eine äußerst kompakte Anordnung, die die Arbeitssicherheit zuverlässig verbessern kann.

Gemäß einem weiteren Aspekt der erfindungsgemäßen Anordnung können die in dem Innenraum der mindestens einen Gehäuseeinheit angeordneten elektrischen und/oder elektronischen Komponenten eine oder mehrere Kommunikations- und/oder Vermittlungseinheiten, Verarbeitungs- und/oder Sensoreinheiten, Energieversorgungseinheiten, Sende- und/oder Empfangseinheiten, Speichereinheiten und/oder Anschlüsse zum Verbinden mit mindestens einer außerhalb der mindestens einen Gehäuseeinheit angeordneten Messeinheit umfassen. Somit kann eine Übermittlung von Messdaten, Auswertedaten und der gleichen einfach und zuverlässig an ein zentrales externes Netzwerk übermittelt werden. In dem zentralen Netzwerk können die übertragenen Daten zentral gespeichert, ausgewertet und/oder überwacht werden. Insbesondere können in dem zentralen Netzwerk die Daten von mehreren Anordnungen und/oder mehreren Anlagen zentral verwaltet und/oder überwacht werden. Somit lassen sich Fehler und/oder Störungen schnell und zuverlässig erkennen und beheben. Somit wird die Zuverlässigkeit des Verteilernetzwerkes verbessert und Ausfallzeiten können reduziert werden. Auch kann sicher und schnell auf etwaige Schwankungen in Frequenz, Strom und/oder Spannung reagiert werden.

Gemäß einem weiteren Aspekt der erfindungsgemäßen Anordnung kann die Anordnung ferner mindestens eine Messeinheit aufweisen, welche insbesondere mit einem Anschluss der Gehäuseeinheit verbindbar oder verbunden ist. Die Messeinheit ist dazu ausgebildet, Messwerte abzugreifen und/oder zu verarbeiten und an eine oder mehrere der elektrischen und/oder elektronischen Komponenten der Gehäuseeinheit zu übertragen. Insbesondere sind mehrere Messeinheiten vorgesehen, welche kaskadierend angeordnet, d.h. in Reihe miteinander verbunden werden, so dass nur ein Anschluss der Gehäuseeinheit zum Verbinden aller Messeinheiten benötigt wird. Somit kann die Anordnung, und insbesondere die Gehäuseeinheit, äußerst kompakt ausgeführt werden.

Die der Erfindung zugrundeliegende Aufgabe wird ferner durch eine Anlage zum Verteilen und/oder Wandeln von elektrischer Energie gelöst. Die Anlage umfasst ein Anlagengehäuse mit zumindest einer oberen Abdeckplatte, mindestens zwei, insbesondere drei, Stromschienen, die parallel zueinander und beabstandet voneinander in dem Anlagengehäuse angeordnet sind, und mindestens eine vorstehend beschriebene Anordnung zum Befestigen an den mindestens zwei Stromschienen. Die Anordnung erstreckt sich entlang der vertikalen Richtung zumindest im Wesentlichen senkrecht zu der Erstreckungsrichtung der mindestens zwei Stromschienen.

Die in Zusammenhang mit der Anordnung beschriebenen Vorteile gelten entsprechend auch für die Anlage. Insbesondere kann die Anordnung besonders einfach in der Anlage eingebaut und/oder ausgewechselt werden. Die Montage und/oder Reparatur- oder Instandhaltungsarbeiten können somit schnell, effizient und durch den eingesetzten Fingerschutz sicher ausgeführt werden. Ferner ermöglicht die Anordnung, eine zentrale Verwaltung, Auswertung, und/oder Überwachung der Anlage. Somit kann die Zuverlässigkeit und Ausfallsicherheit der Anlage oder mehrerer zentral überwachter Anlagen verbessert werden.

Gemäß einem weiteren Aspekt der erfindungsgemäßen Anlage kann Fingerschutz an einen vorhandenen Bauraum der Anlage anpassbar sein. Somit ist der Fingerschutz flexibel an unterschiedliche Bauräume anpassbar und ermöglicht einen zuverlässigen Schutz der Montage- und/oder Wartungsperson vor Kontakt der Stromschienen.

Gemäß einem weiteren Aspekt der erfindungsgemäßen Anlage kann ein oberes Ende des Fingerschutzes in der Schutzposition maximal 10 mm, insbesondere maximal 5 mm, von einer über der Anordnung angeordneten Komponente, insbesondere der oberen Abdeckplatte, beabstandet sein. Somit wird insbesondere ein Hintergreifen und somit ein Kontakt mit den hinter dem Fingerschutz angeordneten Stromschienen sicher und zuverlässig verhindert.

Gemäß einem weiteren Aspekt der erfindungsgemäßen Anlage kann der Fingerschutz das Anlagengehäuse, insbesondere in einer zu der vertikalen Richtung und zu der Erstreckungsrichtung der Stromschienen senkrechten Tiefenrichtung, in einen Stromschienenraum, in welchem die mindestens zwei Stromschienen angeordnet sind, und einen Einsetzraum unterteilen, in welchem die mindestens eine Gehäuseeinheit angeordnet ist. So können insbesondere Austauscharbeiten der Gehäuseeinheit in einem elektrisch von dem Stromschienenraum getrennten Einsetzraum ausgeführt werden, was die Arbeitssicherheit weiter verbessert.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, soweit dem keine technisch zwingenden Hindernisse entgegenstehen.

Die Erfindung wird nun anhand eines bevorzugten Ausführungsbeispiels sowie unter Bezugnahme auf die beigefügten Zeichnungen näher erläutert.

Diese zeigen in:
- Fig. 1: eine schematische Seitenansicht auf eine erfindungsgemäße Anordnung vor der Montage in eine Anlage;
- Fig. 2: eine schematische Seitenansicht einer Anlage nach Montage der in Fig. 1 gezeigten Anordnung in der Anlage;
- Fig. 3A: eine schematische Detailansicht eines Abdeckungselements der Gehäuseeinheit;
- Fig. 3B: eine schematische Detailansicht eines Bodenelements der Gehäuseeinheit;
- Fig. 4: eine schematische Frontansicht auf eine Gehäuseeinheit der Anordnung;
- Fig. 5A: eine schematische Draufsicht auf eine Oberseite, insbesondere ein erstes Seitenabschlusselement, der Gehäuseeinheit;
- Fig. 5B: eine schematische Draufsicht auf eine Unterseite, insbesondere ein zweites Seitenabschlusselement, der Gehäuseeinheit;
- Fig. 6A: eine schematische Darstellung eines Fingerschutzes und eines Montageelements der erfindungsgemäßen Anordnung;
- Fig. 6B: eine schematische Detailansicht des an Stromschienen der Anlage befestigten Montageelements;
- Fig. 6C: schematische Detailansicht einer Vormontagegruppe beim Überführen des Fingerschutzes von einer Montageposition in eine Schutzposition;
- Figs. 7A bis 7C: schematische Detailansichten der Anordnung während eines Montagevorgangs; und
- Figs. 8A und 8B: schematische Detailansichten von Demontageschritten der Gehäuseeinheit.

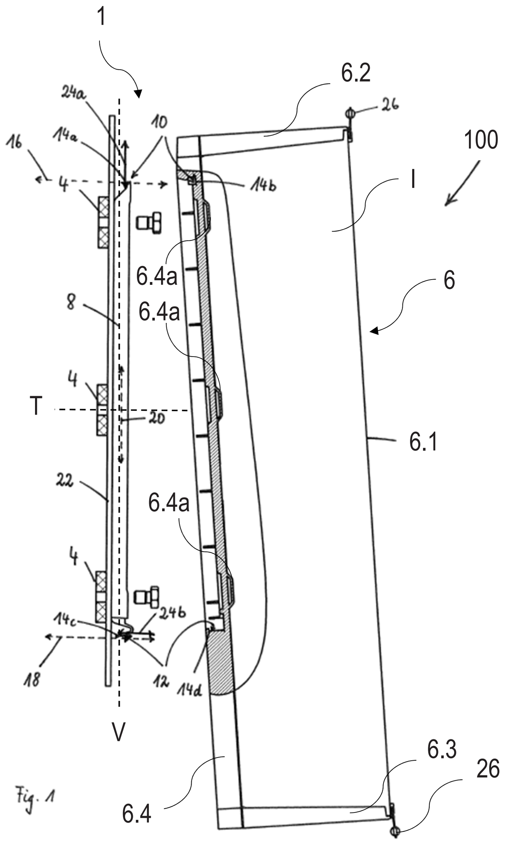

In Fig. 1 ist eine schematische Seitenansicht auf eine Anordnung 1 zum Auswerten und Kommunizieren von Signalen vor Montage der Anordnung 1 in eine Anlage 100 zum Verteilen und/oder Wandeln von elektrischer Energie bzw. elektrischer Leistung gezeigt.

Die Anlage 100 umfasst ein (in den Figuren nicht dargestelltes) Anlagengehäuse mit zumindest einer oberen Abdeckplatte und mindestens eine Stromverteilerschiene oder Stromsammelschiene 4, im Folgenden Stromschiene 4 genannt. In der in Fig. 1 dargestellten Anlage 100 sind drei Stromschienen 4 angeordnet.

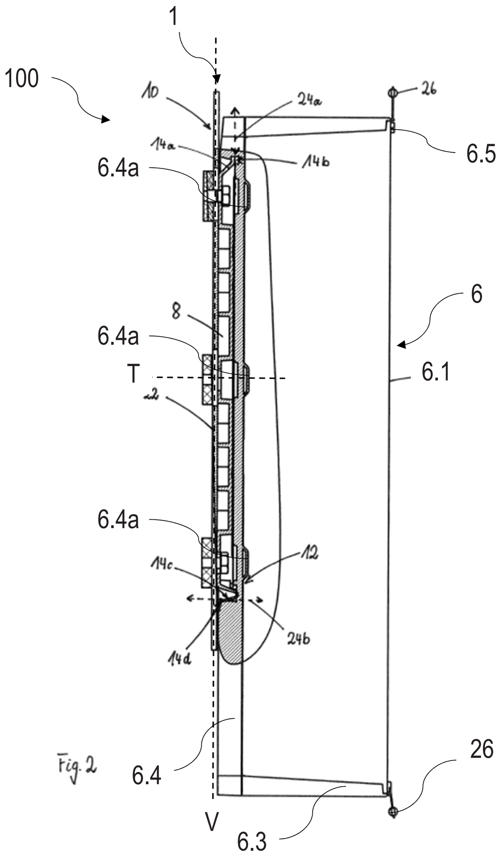

Fig. 1 zeigt die Stromschienen 4 in einer Seitenansicht. Die Stromschienen 4 sind in einem Abstand zueinander, insbesondere in vertikaler Richtung V übereinander, und parallel zueinander verlaufend angeordnet. Insbesondere können die Stromschienen 4 in einer horizontalen Richtung H verlaufen und sind insbesondere in einer senkrecht zu der horizontalen Richtung H verlaufenden vertikalen Richtung V voneinander beabstandet angeordnet. Die horizontale Richtung H verläuft in Figs. 1 und 2 insbesondere senkrecht zu der Zeichnungsebene. Die Tiefenrichtung T ist senkrecht zu sowohl der vertikalen Richtung V und der horizontalen Richtung H und verläuft in Figs. 1 und 2 zumindest im Wesentlichen von links nach rechts.

Die Stromschienen 4 können an einer Wand oder einem oder mehrerer Rahmenelemente des Anlagegehäuses befestigt sein.

Die Anlage 100 kann ferner einen nicht dargestellten Transformator mit einer ersten elektrischen Energie bzw. ersten elektrischen Leistung auf der Primärseite und einer zweiten elektrischen Energie bzw. zweiten elektrischen Leistung auf der Sekundärseite umfassen. Alternativ kann die Anlage 100 Verbindungsleitungen umfassen, die mit der Sekundärseite eines außerhalb der Anlage 100 angeordneten Transformators verbunden sind. Auf der Sekundärseite wird elektrische Leistung im Niederspannungsbereich, insbesondere zwischen 230V und 400V, insbesondere als Wechselspannung, bereitgestellt.

In der Anlage 100 kann ferner mindestens eine Anordnung 1 zum Auswerten und Kommunizieren von Signalen angeordnet sein. Insbesondere ist die Anordnung 1 an mindestens einer, insbesondere zwei, der Stromschienen 4 der Anlage 100 befestigbar oder befestigt.

Die Anordnung 1 umfasst ein Gehäuse oder eine Gehäuseeinheit 6 und ein Montageelement 8. Ferner kann die Anordnung einen Fingerschutz 22 und optional mit der Gehäuseeinheit 6 verbindbare Messeinheiten umfassen. Die Messeinheiten sind dazu ausgebildet, mit den Phasen der Sekundärseite des Transformators, bereits installierten Intelligenten Lastschaltleisten und/oder den einzelnen Stationsabgängen via Rogowskispule und/oder Klappwandler verbunden zu werden und/oder Spannungswerte und/oder Stromwerte zu messen und/oder zu bestimmen.

Das Montageelement 8 ist auf zumindest eine Stromschiene 4 aufsetzbar oder aufgesetzt bzw. an zumindest einer Stromschiene 4 befestigbar oder befestigt. Insbesondere kann das Montageelement 8 mit entsprechenden Befestigungsmittel mit der zumindest einen Stromschiene 4 fest verbunden sein.

In Fig. 1 ist angedeutet, dass das Montageelement 8 mit jeweils einem Befestigungsmittel an zwei der Stromschienen 4, insbesondere an zwei durch eine weitere Stromschiene 4 voneinander beabstandete Stromschienen 4, befestigt ist. Die Befestigungsmittel können wie in Fig. 1 dargestellt als Schrauben ausgebildet sein und entweder direkt in Gewindeöffnungen der Stromschienen 4 geschraubt werden oder an den Stromschienen 4 mittels einer Schrauben-Mutter-Verbindung befestigt werden. Alternative Befestigungsmittel sind auch denkbar.

Das Montageelement 8 kann beispielsweise eine oder mehrere Profilleisten umfassen. Das Montageelement 8 weist insbesondere elektrisch isolierende Eigenschaften auf, so dass die einzelnen Stromschienen 4 voneinander und das Montageelement 8 zu den Stromschienen 4 elektrisch isoliert sind. Mit anderen Worten, die Stromschienen 4 dienen lediglich der räumlichen Positionierung und Befestigung der Anordnung 1 in der Anlage 100.

Die Gehäuseeinheit 6 kann ein Bodenelement 6.4, ein Abdeckungselement 6.1, ein erstes Seitenabschlusselement 6.2 und ein zweites Seitenabschlusselement 6.3 umfassen, welche einen Innenraum I der Gehäuseeinheit 6 definieren. Die Gehäuseeinheit 6 kann dabei vormontiert und insbesondere gekapselt ausgeführt sein. Im Sinne dieser Anmeldung wird unter einer gekapselten Einheit verstanden, dass diese als abgeschlossene Einheit von den Stromschienen 4 der Anlage 100 elektrisch isoliert ist und elektrische Leistung und/oder Daten lediglich über vorbestimmte Anschlüsse 6.2a-e, 6.3a-d in den Innenraum I der Gehäuseeinheit 6 geleitet werden können.

Das Abdeckungselement 6.1 ist insbesondere im Profil U-förmig ausgebildet und aus transparentem Kunststoffmaterial gefertigt. Die Transparenz lässt einen Blick auf den in dem Innenraum I angeordnete elektrische und/oder elektronische Komponenten 6a-6d der Gehäuseeinheit 6 zu.

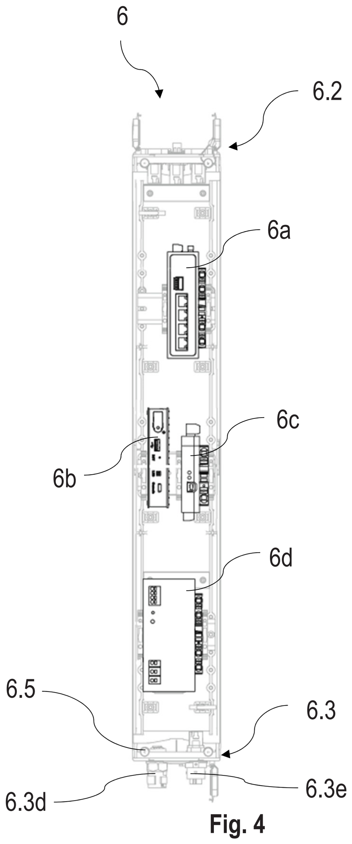

Insbesondere kann die Gehäuseeinheit 6 eine oder mehrere Kommunikations- und/oder Vermittlungseinheiten 6a, 6b, eine Verarbeitungseinheit 6c, eine Energieversorgungseinheit 6d, eine Sende- und/oder Empfangseinheit und/oder einen oder mehrere Anschlüsse 6.2a-e, 6.3a-d zum Verbinden mit außerhalb der Gehäuseeinheit 6 angeordneten Einheiten umfassen. Alternativ kann die Sende- und/oder Empfangseinheit außerhalb der Gehäuseeinheit 6 angeordnet und mit einem oder beiden der Anschlüsse 6.2d, 6.2e mit der Gehäuseeinheit 6 verbunden sein. Dies ist in Figs. 4 bis 5B deutlicher zu erkennen.

Die außerhalb der Gehäuseeinheit 6 angeordneten Einheiten können bspw. Messeinheiten, insbesondere kaskadierende Messeinheiten, umfassen. Unter kaskadierenden Messeinheiten wird im Rahmen der vorliegenden Anmeldung verstanden, dass eine mindestens zwei Messeinheiten angeordnet sind, wobei die zweite Messeinheit mit der ersten Messeinheit verbunden ist und die erste Messeinheit mit einem der Anschlüsse 6,3a-6,3d, insbesondere Anschluss 6.3c, der Gehäuseeinheit 6 verbunden ist. Zusätzliche Messeinheiten können dann entsprechend in Reihe mit der vorausgehenden Messeinheit verbunden werden.

Die Kommunikations- und/oder Vermittlungseinheiten 6a, 6b können dabei für eine Verteilung, Weiterleitung und Konvertierung von Daten, insbesondere zwischen unterschiedlichen Netzwerken, dienen. Mit anderen Worten, es wird eine bidirektionale, protokollübergreifende Datenkommunikation mit Hilfe der Kommunikations- und/oder Vermittlungseinheiten 6a, 6b ermöglicht. So können die an der Anlage 100 ermittelten Daten an ein weiteres Netzwerk zur Speicherung, Analyse, Auswertung und/oder Überwachung bereitgestellt werden.

Die Verarbeitungseinheit 6c kann beispielsweise die von den Messeinheiten ermittelten Daten auswerten, bündeln, umwandeln, gruppieren und/oder sortieren. So kann ein leicht auswertbares Datenbündel erstellt und/oder in einer Speichereinheit gespeichert und/oder (direkt) an ein weiteres Netzwerk bereitgestellt werden.

Die Energieversorgungseinheit 6d ist mit einem Energieversorgungsanschluss, insbesondere einer oder beide der Anschlüsse 6.3a, 6.3b, verbindbar oder verbunden, wodurch die elektrischen und/oder elektronischen Komponenten im Innenraum I der Gehäuseeinheit 6 mit elektrischer Leistung versorgt werden können. Die Energieversorgungseinheit 6d kann einen Pufferenergiespeicher für kurzzeitige Verbindungsausfälle umfassen. Zur Sicherheit der elektrischen und/oder elektronischen Komponenten kann die Energieversorgungseinheit 6d mit dem Erdungsanschluss 6.3d verbunden sein.

Die Sende- und/oder Empfangseinheit umfasst eine oder mehrere Antennen zum Senden und/oder Empfangen von Daten. Die Sende- und/oder Empfangseinheit kann dabei das LTE-Protokoll oder ein höheres Protokoll verwenden.

Die Gehäuseeinheit 6 ist mit dem Montageelement 8 über eine erste Paarung 10 von zusammenwirkenden Befestigungselementen 14a, 14b verbindbar. Im gezeigten Ausführungsbeispiel ist das montageelementseitige Befestigungselement 14a ein Haken, in den eine in dem Bodenelement 6.4 der Gehäuseeinheit 6 ausgebildete Aufnahmenut eingreifen kann oder eingreift, die das gehäuseeinheitsseitige Befestigungselement 14b bildet. Dabei kommt das gehäuseeinheitsseitige Befestigungselement 14b zumindest im Wesentlichen hängend mit dem montageelementseitigen Befestigungselement 14a in Eingriff. Die Montagebewegung der ersten Paarung 10 von zusammenwirkenden Befestigungselementen 14a, 14b erfolgt dabei zumindest im Wesentlichen in einer ersten Montageebene 24a. Die erste Montageebene 24a verläuft (zumindest im Wesentlichen) entlang oder parallel zu der vertikalen Richtung V und die Tiefenrichtung T ist eine Normale der ersten Montageebene 24a.

Alternative Ausführungsformen der ersten Paarung 10 von zusammenwirkenden Befestigungselementen 14a, 14b sind auch denkbar.

Als zweite Paarung 12 von zusammenwirkenden Befestigungselementen 14c, 14d ist im Ausführungsbeispiel eine Rastverbindung gezeigt, die als montageelementseitiges Befestigungselement 14c eine gefederte Lasche und als gehäuseeinheitsseitiges Befestigungselement 14d eine Rastnase aufweist. Die zweite Paarung 12 von zusammenwirkenden Befestigungselementen 14c, 14d weist dabei federnde und/oder elastische und/oder kompensierende Eigenschaften auf, welche die Befestigung und/oder eine Demontage der Gehäuseeinheit 6 ermöglichen. Die Montagebewegung der zweiten Paarung 12 von zusammenwirkenden Befestigungselementen 14c, 14d erfolgt dabei zumindest im Wesentlichen entlang einer zweiten Montageebene 24b. Die zweite Montageebene 24b verläuft (zumindest im Wesentlichen) entlang oder parallel zu der Tiefenrichtung T und die vertikale Richtung V ist eine Normale der zweiten Montageebene 24b. Gemäß dieser Anmeldung ist auch ein Einschwenkvorgang der zweiten Paarung 12 von zusammenwirkenden Befestigungselementen 14c, 14d als zumindest im Wesentlichen entlang der zweiten Montageebene 24b verlaufend umfasst.

Die gehäuseeinheitsseitigen Befestigungselemente 14b, 14d sind in den Figs. 1 und 2 gut sichtbar, weil die Gehäuseeinheit 6 in diesem Bereich in einer Teilschnittansicht gezeigt ist.

Die zweite Paarung 12 von zusammenwirkenden Befestigungselementen 14c, 14d ist dazu ausgebildet, bei einer Demontage der Gehäuseeinheit 6 von dem Montageelement 8 eine Ausgleichsbewegung in der vertikalen Richtung V ausführen zu können, so dass die erste Paarung 10 an zusammenwirkenden Befestigungselementen 14a, 14b in zumindest im Wesentlichen der Tiefenrichtung T gelöst werden kann. Mit anderen Worten, die Montageebenen 24a, 24b kehren sich bei im Vergleich zu der Montage bei der Demontage um.

Alternative Ausgestaltungen der zweiten Paarung 12 von zusammenwirkenden Befestigungselementen 14c, 14d sind denkbar, solange diese eine kompensierende Eigenschaft ermöglichen, wodurch die Gehäuseeinheit 6 bei der Demontage in zumindest in Wesentlichen vertikaler Richtung V in einem ersten Schritt verschoben werden kann.

Die erste Paarung 10 von zusammenwirkenden Befestigungselementen 14 kann insbesondere in einer ersten Ebene 16 und die zweite Paarung 12 von zusammenwirkenden Befestigungselementen 14 in einer zweiten Ebene 18 angeordnet sein. Die erste Ebene 16 befindet sich in einer Höhe oberhalb der zweiten Ebene 18. Mit anderen Worten, die erste Ebene 16 ist entlang der vertikalen Richtung V von der zweiten Ebene 18 beabstandet. Die ersten Ebene 16 und die zweite Ebene 18 sind zumindest parallel zueinander. Die beiden Paarungen 10, 12 von zusammenwirkenden Befestigungselementen 14 befinden sich insbesondere in einer gemeinsamen vertikalen Ebene 20.

In Fig. 2 ist eine schematische Seitenansicht auf die in Fig. 1 gezeigte Anlage 100 nach der Montage der Gehäuseeinheit 6 gezeigt. Die erste 24a und zweite 24b Montageebenen, über die die ersten 10 und 12 zweiten Paarungen von zusammenwirkenden Befestigungselementen 14 miteinander in Eingriff kommen, weichen voneinander ab. Die erste Montageebene 24a, in der die erste Paarung 10 von zusammenwirkenden Befestigungselementen 14a, 14b miteinander in Eingriff kommt, ist in einer vertikalen räumlichen Lage ausgerichtet, und die zweite Montageebene 24b, in der die zweite Paarung 12 von zusammenwirkenden Befestigungselementen 14c, 14d miteinander in Eingriff kommt, ist in einer zumindest annähernd horizontalen räumlichen Lage ausgerichtet.

Für die Montage der Gehäuseeinheit 6 in der Anlage 100 und die Demontage der Gehäuseeinheit 6 aus der Anlage 100 ist es dabei erfindungsgemäß nicht erforderlich, die Verplombung 26 zu öffnen, um in den Innenraum I der Gehäuseeinheit 6 zu gelangen. Die Montage und Demontage kann mit einer verschlossenen Gehäuseeinheit 6 ausgeführt werden. Insbesondere kann die Gehäuseeinheit 6 als vorbestücktes und versiegeltes Bauteil bereitgestellt werden, wodurch Fehler beim Zusammensetzen vermieden werden können.

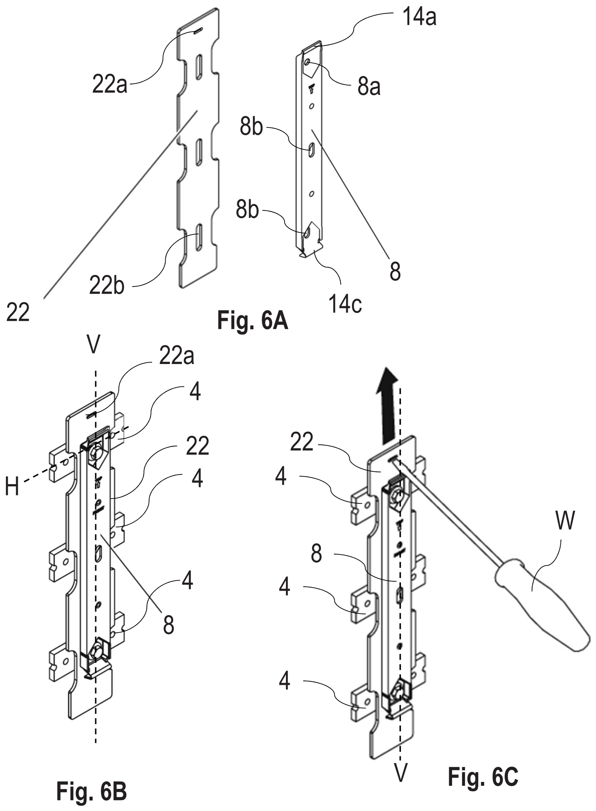

Zwischen den Stromschienen 4 und dem Montageelement 8 kann der Fingerschutz 22 montiert sein, der von der Verschraubung des Montageelements 8 mit den Stromschienen 4 kraftschlüssig gehalten ist. Der Fingerschutz 22 ist dabei erfindungsgemäß von einer Montageposition in eine Schutzposition, insbesondere entlang der vertikalen Richtung V, überführbar. Dies wird in Verbindung mit Figs. 6A bis 6C genauer erläutert.

In der Schutzposition verhindert der Fingerschutz 22 einen Kontakt der Stromschienen 4. Ein solcher Kontakt kann hierbei insbesondere durch einen Spalt zwischen der Oberseite der Gehäuseeinheit 6 und dem Anlagengehäuse oder einer in vertikaler Richtung V oberhalb der Gehäuseeinheit 6 angeordneten Komponente erfolgen. Eine darüber angeordnete Komponente könnte beispielsweise auch eine weitere Anordnung 1 oder eine weitere Gehäuseeinheit 6 sein.

In der Montageposition kann dieser Spalt zumindest bereichsweise freiliegen. Mit anderen Worten, zumindest ein Bereich oder Raum in vertikaler Richtung V über der Gehäuseeinheit 6 kann in der Montageposition des Fingerschutz 22 nicht von dem Fingerschutz 22 überdeckt sein.

Insbesondere kann dieser Spalt von Anlage 100 zu Anlage 100 und/oder in Abhängigkeit der eingesetzten Gehäuseeinheit 6 und/oder der Einbaulage der Anordnung 1 unterschiedlich groß ausgebildet sein. Um die Größenänderung des Spalts kompensieren zu können, ist der Fingerschutz 22 vorzugsweise entlang von Langlöchern 22b verschieblich ausgebildet. So kann der Fingerschutz 22 vorteilhafterweise flexibel an den verfügbaren Einbauraum und die darin angebrachte(n) Gehäuseeinheit(en) 6 angepasst werden. Mit anderen Worten, der Fingerschutz 22 eignet sich insbesondere zum Einsatz in unterschiedlichen Anlagen 100 mit variierenden Abmessungen. Es muss also nicht auf einen passenden, einer jeweiligen Anlage 100 zugeordneter Fingerschutz 22 gewählt werden.

Dabei kann der Fingerschutz 22 mittels eines in eine nicht-durchgängig ausgebildete Ausnehmung 22a eingreifenden Werkzeugs W von der Montageposition in die Schutzposition überführt und während eines Befestigungsvorgangs des Montageelements 8 an zumindest eine Stromschiene 4 gehalten werden. Anschließend kann das Werkzeug W gelöst werden. In Fig. 6C ist das Werkzeug W als Schraubenzieher angedeutet. Es kann allerdings auch andere Werkzeuge W eingesetzt werden, die mit der Ausnehmung 22a in Eingriff gebracht werden können.

Der Fingerschutz 22 kann durch das befestigte Montageelement 8 kraftschlüssig in der Schutzposition gehalten werden.

Das Montageelement 8 und die Gehäuseeinheit 6 können aus einem Kunststoff hergestellt sein. Dies gewährleistet eine zuverlässige elektrische Isolation von den Stromschienen 4 der Anlage 100.

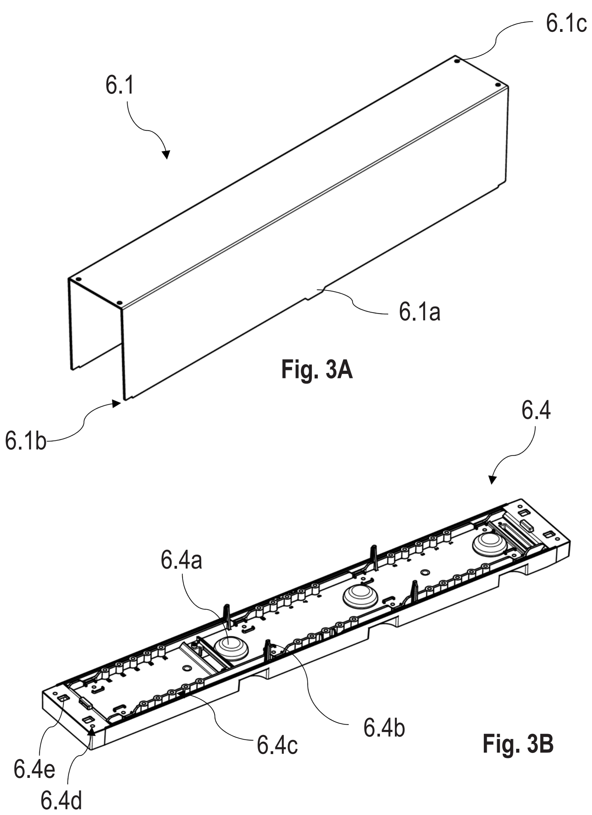

Figs. 3A bis 5B zeigen weitere Details zu der erfindungsgemäßen Gehäuseeinheit 6der Anordnung 1.

Fig. 3A zeigt eine schematische Detailansicht des Abdeckungselements 6.1 der Gehäuseeinheit 6. Das Abdeckungselement 6.1 ist insbesondere im Profil U-förmig ausgebildet und aus transparentem Kunststoffmaterial gefertigt. Die Transparenz lässt einen Blick auf den in dem Innenraum I angeordnete elektrische und/oder elektronische Komponenten 6a-6d der Gehäuseeinheit 6 zu.

Das Abdeckungselement 6.1 ist mit dem Bodenelement 6.4 verbindbar. Zur Positionierung und Zentrierung des Abdeckungselements 6.1 an dem Bodenelement 6.4 umfasst das Abdeckungselement 6.1 auf jedem Schenkel einen Zentriervorsprung 6.1a, der in Eingriff mit einer komplementär geformten Nut oder Ausnehmung des Bodenelements 6.4 kommt. Das Abdeckungselement 6.1 weist an den Schenkeln ferner Ausnehmungen 6.1b auf. Die Ausnehmungen 6.1b folgen der Kontur des Bodenelements 6.4 zur besseren Abgrenzung des Innenraums I gegenüber der Umgebung.

Das Verbindungsabschnitt des Abdeckungselements 6.1, d.h. der Abschnitt, welcher die beiden Schenkel miteinander verbindet, weist ferner vier Durchgangsbohrungen 6.1c auf. Über die Durchgangsöffnungen 6.1c wird das Abdeckungselement 6.1 mit dem ersten und zweiten Seitenabschlusselement 6.2, 6.3 verbunden. Insbesondere können Schrauben 6.5 durch die Durchgangsöffnungen 6.1c geführt sein und in Gewindeöffnungen der zugeordneten Seitenabschlusselemente 6.2, 6.3 verschraubt sein. Um den Verbindungsbereich kann im fixierten Zustand eine Versiegelung oder Verplombung 26 angeordnet sein. Diese dient zur Verhinderung eines unerwünschten Öffnens der Gehäuseeinheit 6 und/oder zum Erkennen von Manipulationsversuchen der Gehäuseeinheit 6.

In Fig. 3B ist ein Bodenelement 6.4 der Gehäuseeinheit 6 schematisch dargestellt. Fig. 3B zeigt mehrere, insbesondere drei, in Richtung des Innenraums I der Gehäuseeinheit 6 konvex ausgebildete Ausstülpungen 6.4a. Diese dienen dazu, die Befestigungselemente, mit welchen das Montageelement 8 an den Stromschienen 4 fixiert wird oder ist, zu überdecken. Dadurch kann für eine sichere und zuverlässige elektrische Isolation der Gehäuseeinheit 6 gesorgt werden.

Ferner ist an jeder den Schenkeln des Abdeckungselements 6.1 zugeordneten Seiten jeweils eine Führungsgeometrie 6.4c sowie mindestens ein Führungsvorsprung 6.4b ausgebildet. In der in Fig. 3B dargestellten Ausführungsform des Bodenelements 6.4 weist das Bodenelement 6.4 vier Führungsvorsprünge 6.4b auf, von denen sich jeweils zwei einander gegenüberliegend angeordnet sind. Die Führungsvorsprünge 6.4b sowie die Führungsgeometrie 6.4c erleichtern das Positionieren des Abdeckungselements 6.1 und die Führungsvorsprünge 6.4b dienen insbesondere zusätzlich zur Abstützung der Schenkel des Abdeckungselements 6.1.

Das Bodenelement 6.4 umfasst an den Endbereichen jeweils zwei Durchgangsöffnungen 6.4d, durch welche Verbindungselemente wie Schrauben führbar sind, und zwei Positionierausnehmungen 6.4e, welche zur Aufnahme von komplementär geformten Positioniervorsprüngen der Seitenabschlusselemente 6.2, 6.3 dienen. Die Verbindungselemente können in Verbindungsöffnungen der Seitenabschlusselemente 6.2, 6.3 fixiert, insbesondere geschraubt, werden. Die dem Innenraum I der Gehäuseeinheit 6 zugewandte Fläche des Bodenelements 6.4 kann Verbindungselemente zur Positionierung, Fixierung und/oder elektrischen Verbindung der elektrischen und/oder elektronischen Komponenten 6a-6d aufnehmen und anordnen oder die elektrischen und/oder elektronischen Komponenten 6a-6d direkt positionieren.

Fig. 4 zeigt eine schematische Draufsicht auf die Gehäuseeinheit 6. Das transparente Abdeckungselement 6.1 ermöglicht hierbei einen Blick auf die im Innenraum I angeordneten elektrischen und/oder elektronischen Komponenten 6a-6d. Weiter sind in Fig. 4 das erste Seitenabschlusselement 6.2 und das zweite Seitenabschlusselement 6.3 angedeutet, an denen das Abdeckungselement 6.1 jeweils über Schrauben 6.5 fixierbar oder fixiert ist. In Fig. 4 sind schwenk- oder drehbare Abdeckungskappen der Seitenabschlusselemente 6.2, 6.3 dargestellt. Insbesondere sind zwei Abdeckungskappen des ersten Seitenabschlusselements 6.2 und eine Abdeckungskappe des zweiten Seitenabschlusselements 6.3 gezeigt, welche zum Schutz des Innenraums I sowie der zugeordneten Anschlüsse 6.2b, 6.2c, 6.3c in eine geschlossene, den zugehörigen Anschluss abdeckende Position überführbar ist, insbesondere dann wenn an dem Anschluss keine Elemente nach außen verbunden sind oder zum Transport und/oder Lagerung der Gehäuseeinheit 6.

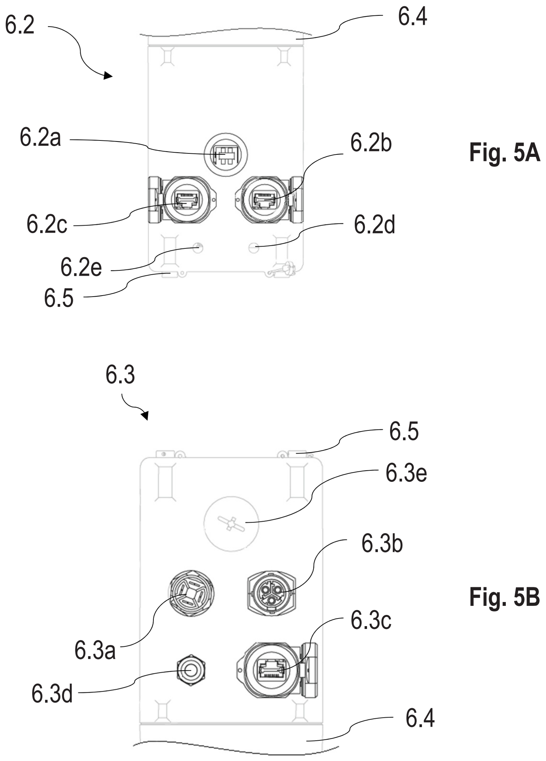

Figs. 5A zeigt eine schematische Darstellung des ersten Seitenabschlusselements 6.2 der Gehäuseeinheit 6 und Fig. 5B eine schematische Darstellung des zweiten Seitenabschlusselements 6.3 der Gehäuseeinheit 6. Die Seitenabschlusselemente 6.2, 6.3 begrenzen den Innenraum I der Gehäuseeinheit 6 an den offenen Enden des Abdeckungselements 6.1. Ferner können die Seitenabschlusselemente 6.2, 6.3 ferner mindestens einen Anschluss 6.2a-c, 6.3a-d aufweisen zum Verbinden mit Komponenten, die außerhalb des Innenraums I angeordnet sind.

Wie in Fig. 5A dargestellt ist, kann das erste Seitenabschlusselement 6.2 beispielsweise mindestens einen Anschluss 6.2d, 6.2e zum Anschließen von einer oder mehreren Sende- und/oder Empfangseinheiten, und mindestens einen Daten- und/oder Kommunikationsanschluss 6.2a-6.2c. Die Anschlüsse 6.2a-6.2e können dabei mit schwenk- und/oder drehbaren Abdeckungskappen verschlossen werden. In Fig. 5A ist dies bei Anschlüssen 6.2b und 6.2c angedeutet.

Wie aus Fig. 5B ersichtlich ist, kann das zweite Seitenabschlusselement 6.3 beispielsweise mindestens einen Anschluss 6.3d zum Erden der Gehäuseeinheit 6 bzw. von darin angeordneten elektrischen und/oder elektronischen Komponenten 6a-6d, einen Blindanschluss der mit einer Abdeckungskappe 6.3e verschlossen ist, sowie mindestens einen Energieversorgungsanschluss 6.3a-6.3c. Der Anschluss 6.3d kann dabei mit einem Erdungskabel verbindbar oder verbunden sein. Die Anschlüsse 6.3a-6.3d können dabei mit schwenk- und/oder drehbaren Abdeckungskappen verschlossen werden. In Fig. 5B ist dies bei Anschluss 6.3c angedeutet.

Erfindungsgemäß erfolgt die Energieversorgung der in dem Innenraum I der Gehäuseeinheit 6 angeordneten elektrischen und/oder elektronischen Komponenten 6a-6d über die Anschlüsse 6.3a-6.3c. Mit anderen Worten, die Versorgungsspannung wird über zumindest einen der Anschlüsse 6.3a-6.3c, insbesondere 6.3a und/oder 6.3b, bereitgestellt. Zusätzlich oder kombiniert kann eine auszuwertende Spannung oder Messspannung kann über zumindest einen der Anschlüsse 6.3a-6.3c, insbesondere 6.3a, bereitgestellt werden.

Ein oder mehrere Messeinheiten, insbesondere mindestens zwei kaskadierend verbundene Messeinheiten, können mit einem der Anschlüsse 6.3a-6.3c, insbesondere 6.3c verbunden sein. Die Messeinheiten können dazu ausgebildet sein, mit den Phasen der Primärseite und/oder der Sekundärseite des Transformators verbunden zu werden und Spannungswerte, Stromwerte und Widerstandsauswertungen zu messen und/oder zu bestimmen.

Eine direkte elektrische Verbindung zwischen einer oder mehrerer der Stromschienen 4 und dem Innenraum I der Gehäuseeinheit 6 bzw. zu elektrischen und/oder elektronischen Komponenten 6a-6d ist nicht vorgesehen.

In Figs. 5A und 5B sind die Seitenabschlusselemente 6.2, 6.3 mit dem Bodenelement 6.4 verbunden dargestellt. Dazu können die jeweiligen Seitenabschlusselemente 6.2, 6.3 mit ihren Positioniervorsprüngen in den Positionierausnehmungen 6.4e eingreifend angeordnet werden und entsprechende Verbindungselemente, insbesondere Schrauben, durch die Durchgangsöffnungen 6.4d des Bodenelements 6.4 durchgeführt und in entsprechenden Verbindungsöffnungen der Seitenabschlusselemente 6.2, 6.3 fixiert werden, insbesondere geschraubt werden.

Ferner sind in Figs. 5A und 5B die Schrauben 6.5 zur Befestigung des Abdeckungselements 6.1 an den Seitenabschlusselementen 6.2, 6.3 gezeigt.

Figs. 6A bis 6C zeigen schematische Detailansichten des Fingerschutzes 22 und des Montageelements 8 vor und während eines Montagevorganges.

Fig. 6A zeigt schematische Darstellungen des Fingerschutzes 22 und des Montageelements 8.

Der Fingerschutz 22 weist eine zumindest im Wesentlichen plattenförmige, längliche Form auf. Diese kann zumindest im Wesentlichen rechteckig sein. Eine oder mehrere, in der dargestellten Ausführungsform drei, Langlöcher 22b sind entlang der Längserstreckungsrichtung des Fingerschutzes 22 voneinander beabstandet angeordnet. Der Abstand zwischen den Mittelpunkten zweier benachbarter Langlöchern 22b entspricht dabei zumindest im Wesentlichen dem Abstand von zwei benachbarten Stromschienen 4, insbesondere dem Abstand zwischen den Mittellinien der zwei benachbarten Stromschienen 4. Durch die Langlöcher 22b ist jeweils ein Fixierungselement, insbesondere eine Schraube oder ein Gewindebolzen, führbar. Insbesondere kann eine Breite der Langlöcher 22b dabei größer gewählt sein als der Außendurchmesser der Fixierungselemente.

Die Langlöcher 22b ermöglichen es, den Fingerschutz 22 während des Montagevorganges der Anordnung 1 von einer Montageposition in eine Schutzposition zu überführen.

Der Fingerschutz 22 umfasst ferner eine nicht-durchgängig ausgebildete Ausnehmung 22a. Mit anderen Worten, die Ausnehmung 22a durchdringt den Fingerschutz 22 in der Tiefenrichtung T nicht durchgehend, so dass ein Boden gebildet ist. Somit ist die Ausnehmung 22a bei einer Draufsicht auf die Rückseite des Fingerschutzes 22, d.h. die Seite, mit welcher der Fingerschutz 22 in Kontakt mit den Stromschienen 4 kommt, nicht sichtbar.

Der Fingerschutz 22 kann ferner weitere Ausnehmungen auf einer oder beiden Seiten neben den Langlöchern 22b aufweisen. Diese ermöglichen es, weitere Elemente an den Stromschienen 4 zu befestigen oder Platz für Fixierungen der Stromschienen 4 an dem Anlagengehäuse bereitzustellen.

Das Montageelement 8 ist in der Fig. 6A in einem gelösten Zustand dargestellt. Fig. 6A zeigt insbesondere die montageelementseitigen Befestigungselemente 14a und 14c zur Befestigung der Gehäuseeinheit 6. Ferner umfasst das Montageelement 8 eine erste Befestigungsöffnung 8a und zumindest eine zweite Befestigungsöffnung 8b. Eines der Befestigungselemente 8a, 8b kann dabei als Rundbohrung ausgebildet sein, während das andere als Langloch ausgeführt ist bzw. die anderen als Langlöcher ausgeführt sind. Dies ermöglicht es, einen Versatz oder eine Positionierungenauigkeit der Stromschienen 4 auszugleichen.

Jeweils ein Fixierungselement, insbesondere eine Schraube oder ein Schraubbolzen, erstreckt sich durch die erste und zweite Befestigungsöffnung 8a, 8b des Montageelements 8, sowie durch ein zugeordnetes Langloch 22b des Fingerschutzes 22 und wird an den zugehörigen Stromschienen 4 fixiert. Die Fixierungselemente können dabei direkt an den Stromschienen 4 fixiert werden oder über ein weiteres Befestigungselemente, wie bspw. Muttern, mit diesen befestigt werden.

In einem ersten Schritt werden Verbindungen gebildet. Dazu werden die Fixierungselemente an den jeweiligen Stromschienen 4 fixiert und anschließend der Fingerschutz 22 und das Montageelement 8 aufgesteckt. Ein Abfallen des Fingerschutzes 22 und/oder des Montageelements 8 wird durch Anbringen der weiteren Befestigungselemente auf die Fixierungselemente verhindert.

Alternativ können das Montageelement 8 und der Fingerschutz 22 auf die Fixierungselemente gesteckt werden und zusammen in die entsprechenden Öffnungen in den Stromschienen geschraubt werden. Auch bei dieser Alternative können die Fixierungselemente Schrauben oder Gewindebolzen sein. Bei Verwendung von Gewindebolzen ist entsprechend jeweils ein weiteres Befestigungselement mit dem Gewindebolzen verbunden, um das Montageelement 8 und den Fingerschutz 22 halten zu können.

Die Öffnungen der Stromschienen 4 können mit einem Innengewinde ausgestattet. Beide Möglichkeiten bilden die Verbindungen. Dabei ist eine Verbindung insbesondere einem Fixierungselement zugeordnet. Mit anderen Worten, mit zwei Fixierungselemente können zwei Verbindungen gebildet werden.

Zunächst werden die Verbindungen nur lose fixiert. Mit anderen Worten, die weiteren Befestigungselemente werden nur lose angezogen bzw. die Fixierungselemente werden nur lose an den Stromschienen 4 befestigt. In diesem Zustand ist der zwischen den Stromschienen 4 und dem Montageelement 8 angeordnete Fingerschutz 22 entlang der vertikalen Richtung V, in welcher die Langlöcher 22b ausgerichtet sind, verschieblich angeordnet. Der Fingerschutz 22 fällt durch die Schwerkraft zunächst in die Montageposition. Dies ist in Fig. 6B angedeutet.

In Fig. 6C ist weiter angedeutet, dass in einem weiteren Schritt der Fingerschutz 22 mithilfe eines Werkzeugs W von der Montageposition in eine Schutzposition überführt wird.

Dazu greift das Werkzeug W in die Ausnehmung 22a ein und der Fingerschutz 22 wird in vertikaler Richtung V nach oben gezogen, bis die obere Kante des Fingerschutzes 22 an ein in dem Anlagengehäuse darüber angeordnete Komponente, wie eine obere Abdeckungsplatte des Anlagengehäuses oder eine weitere Gehäuseeinheit 6 oder andere Elemente, stößt.

Vor dem Lösen des Werkzeugs W wird zumindest eine Verbindung fest fixiert. Dazu kann eines der weiteren Befestigungselemente fest angezogen oder eines der Fixierungselemente fest verschraubt werden, so dass die Verbindung fest fixiert ist. Der Fingerschutz 22 wird nun reib- und/oder kraftschlüssig zwischen den Stromschienen 4 und dem Montageelement 8 in der Schutzposition gehalten.

Die weiteren Verbindungen können dann auch nach dem Lösen des Werkzeugs W fest fixiert werden.

Bei dem Werkzeug W kann es wie dargestellt um einen Schraubendreher oder jegliches Werkzeug, das in die Ausnehmung 22a eingreifbar ist, handeln.

Das Montageelement 8 bildet zusammen mit mindestens zwei Stromschienen 4 und den Fixierungselementen eine Vormontage-Gruppe. Optional und gemäß einer bevorzugten Ausführungsform umfasst die Vormontage-Gruppe ferner den Fingerschutz 22.

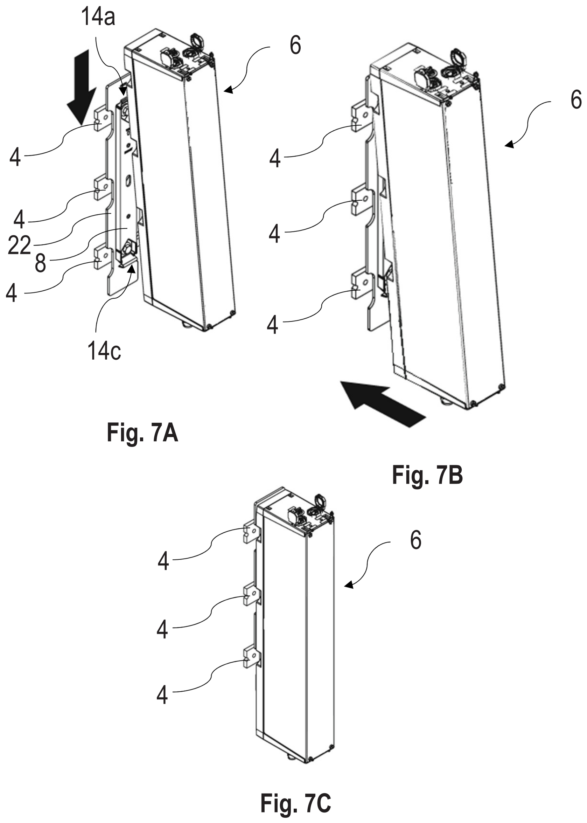

Figs. 7A bis 7C zeigen weitere Schritte in einem Verfahren zum Montieren der Anordnung 1 in einer Anlage 100.

In einem ersten Schritt wird eine Vormontage-Gruppe bereitgestellt. Die Vormontage-Gruppe umfasst zumindest das Montageelement 8, mindestens zwei Stromschienen 4 und mindestens zwei Fixierungselemente. In diesem Zusammenhang umfasst der Ausdruck Fixierungselement das Fixierungselement oder eine Kombination aus dem Fixierungselement und einem oder zwei weiteren Befestigungselementen, je nach Anwendungsfall und Art des Fixierungselementes.

In einem weiteren Schritt wird das Montageelement 8 an zwei der mindestens zwei Stromschienen 4 mittels der Fixierungselemente befestigt.

Vorzugsweise umfasst die Vormontage-Gruppe ferner den Fingerschutz 22, der zwischen dem Montageelement 8 und den Stromschienen 4 angeordnet wird. Dabei umfasst das Befestigen des Montageelements 8 an den Stromschienen 4 das Überführen des Fingerschutzes 22 von der Montageposition in die Schutzposition, wie dies in Verbindung mit Figs. 6A bis 6C gezeigt und beschrieben ist.

In einem weiteren Schritt wird die Gehäuseeinheit 6 bereitgestellt und werkzeuglos an dem Montageelement 8 montiert. Dies erfolgt über die erste Paarung 10 von zusammenwirkenden Befestigungselementen 14a, 14b und die zweite Paarung 12 von als Clips-, Klemm-, Schnapp-, Hak-, Riegel- und/oder Rastverbindung zusammenwirkenden Befestigungselementen 14c, 14d.

Wie in Fig. 7A dargestellt ist, wird die Gehäuseeinheit 6 zunächst über die erste Paarung 10 von zusammenwirkenden Befestigungselementen 14a, 14b in der vertikalen Richtung V hängend mit dem Montageelement 8, insbesondere mit dem montageelementseitigen Befestigungselement 14a, in Eingriff gebracht und verbunden. Dies ist in Fig. 7A über den Pfeil angedeutet.

In Fig. 7B ist der nächste Schritt des Montageverfahrens angedeutet. Dabei wird die zweite Paarung 12 von zusammenwirkenden Befestigungselementen 14c, 14d zumindest im Wesentlichen entlang der Tiefenrichtung T, insbesondere als Schwenk- und/oder Drehbewegung, einclipsend, klemmend, schnappend, hakend, riegelnd, und/oder rastend an dem Montageelement 8, insbesondere dem zweiten montageelementseitigen Befestigungselement 14c, verbunden. Bei der Fixierung der zweiten Paarung 12 von zusammenwirkenden Befestigungselementen 14c, 14d kann ein Klickgeräusch entstehen, das eine korrekte Befestigung andeutet.

Fig. 7C zeigt den fixierten Zustand der Gehäuseeinheit 6 an dem Montageelement 8, welches wiederum an den Stromschienen 4 der Anlage 100 fixiert ist.

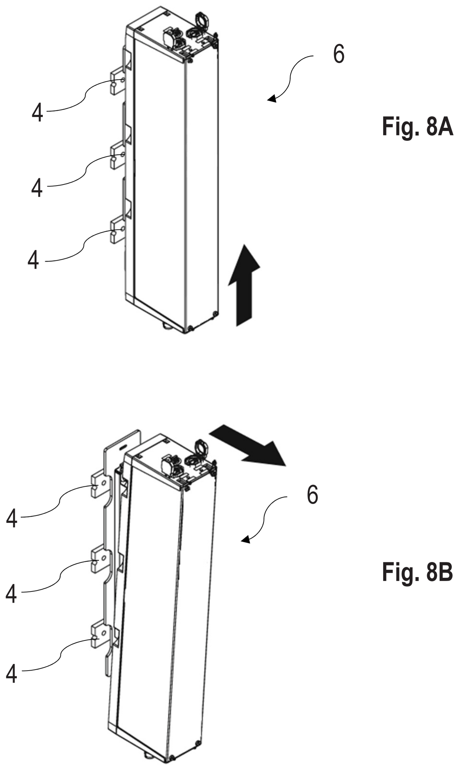

Figs. 8A und 8B zeigen ein Demontage-Verfahren der Gehäuseeinheit 6 aus der Anlage 100. Dies kann insbesondere bei einem Austausch, einer Reparatur, einer Wartung der Anlage 100 oder der Gehäuseeinheit 6 nötig sein.

Dabei wird wie in Fig. 8A zu sehen zunächst die Gehäuseeinheit 6 in vertikaler Richtung V nach oben gedrückt, wie dies durch den Pfeil in Fig. 8A angedeutet ist. Dies wird durch die resiliente und/oder ausgleichende Eigenschaft der zweiten Paarung 12 an zusammenwirkenden Befestigungselementen 14c, 14d ermöglicht.

Im nächsten Schritt kann die Gehäuseeinheit 6 durch Lösen der ersten Paarung 10 von zusammenwirkenden Befestigungselementen 14a, 14b zumindest im Wesentlichen in der Tiefenrichtung T durch eine Schwenk- und/oder Drehbewegung von dem Montageelement 8 werkzeuglos gelöst werden. Dies ist durch den Pfeil in Fig. 8B angedeutet.

Insbesondere kehren sich bei der Demontage die Bewegungsrichtungen der ersten und zweiten Paarungen 10, 12 an zusammenwirkenden Befestigungselementen 14a-14d im Vergleich zu der Montage um. Während bei der Montage die erste Paarung 10 an zusammenwirkenden Befestigungselementen 14a, 14b zumindest im Wesentlichen entlang der vertikalen Richtung V befestigt wird, wird die erste Paarung 10 an zusammenwirkenden Befestigungselementen 14a, 14b bei der Demontage zumindest im Wesentlichen entlang der Tiefenrichtung T, insbesondere schwenkend, gelöst. Analog wird bei der Montage die zweite Paarung 12 an zusammenwirkenden Befestigungselementen 14c, 14d zumindest im Wesentlichen entlang der Tiefenrichtung T, insbesondere schwenkend, befestigt, während bei der Demontage die zweite Paarung 12 an zusammenwirkenden Befestigungselementen 14c, 14d eine Verschiebung in vertikaler Richtung V ausübt, um das Lösen der ersten Paarung 10 an zusammenwirkenden Befestigungselementen 14a, 14b zu ermöglichen.

Es ist denkbar, dass auf einem Montageelement 8 mehrere Gehäuseeinheiten 6 angeordnet werden können. Dazu ist eine entsprechende Anzahl an ersten und zweiten montageelementseitigen Befestigungselementen 14a, 14c anzuordnen.

Es ist auch denkbar, den Fingerschutz 22 in der Breite so zu gestalten, dass mindestens zwei Montageelemente 8 nebeneinander diesem Fingerschutz zugeordnet sind. Dazu ist der Fingerschutz 22 mit einer entsprechen angepassten Anzahl an Langlöchern 22b auszustatten.

Die Anordnung 1 dient insbesondere der Weiterleitung von Messdaten an ein zweites Kommunikations-Netzwerk, das außerhalb der Anlage 100 liegt. So können die Daten verschiedener Anlagen 100 einfach und zuverlässig zentral überwacht und ausgewertet werden. Damit sind Auffälligkeiten und/oder Störungen in einem Stromverteilungsnetz schnell und zuverlässig erkennbar. Etwaige Reparatur- und/oder Instandhaltungsarbeiten an dem Stromnetz und/oder Anlagen 100 können somit schnell beauftragt werden, sodass die Ausfallsicherheit des Stromnetzes verbessert werden kann.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

- 100: Anlage

- 1: Anordnung

- 4: Stromschiene

- 6: Gehäuseeinheit
- 6a-d: elektrische und/oder elektronische Komponenten

- 6.1: Abdeckungselement
- 6.1a: Zentrierungsvorsprung
- 6.1b: Ausnehmung
- 6.1c: Durchgangsöffnung

- 6.2: erstes Seitenabschlusselement
- 6.2a-e: Anschlüsse

- 6.3: zweites Seitenabschlusselement
- 6.3a-c: Anschlüsse
- 6.3d: Erdungsanschluss
- 6.3e: Abdeckungskappe

- 6.4: Bodenelement
- 6.4a: konvexe Ausstülpung
- 6.4b: Führungsvorsprung
- 6.4c: Führungsgeometrie
- 6.4d: Durchgangsöffnung
- 6.4e: Positionierausnehmung

- 6.5: Schrauben
- 8: Montageelement
- 8a: erste Befestigungsöffnung
- 8b: zweite Befestigungsöffnung

- 10: erste Paarung

- 12: zweite Paarung

- 14a-d: Befestigungselemente

- 16: erste Ebene
- 18: zweite Ebene

- 20: vertikale Ebene

- 22: Fingerschutz
- 22a: Ausnehmung
- 22b: Langlöcher

- 24a: erste Montageebene
- 24b: zweite Montageebene

- 26: Verplombung

- I: Innenraum der Gehäuseeinheit

- W: Werkzeug

- V: vertikale Richtung
- H: horizontale Richtung
- T: Tiefenrichtung

## Patentansprüche

1. Anordnung (1) zum Befestigen an mindestens einer Stromschiene (4) einer Anlage (100) zum Verteilen und/oder Wandeln von elektrischer Energie, wobei die Anordnung (1) Folgendes aufweist:
mindestens eine Gehäuseeinheit (6), die mit der mindestens einen Stromschiene (4) der Anlage (100) verbindbar ist; und
einen Fingerschutz (22), der zwischen der mindestens einen Stromschiene (4) und der Gehäuseeinheit (6) angeordnet ist,
wobei der Fingerschutz (22) zwischen einer Montageposition und einer Schutzposition, insbesondere zumindest im Wesentlichen in einer vertikalen Richtung (V), überführbar ausgebildet ist, und
wobei der Fingerschutz (22) in der Schutzposition einen Kontakt der mindestens einen Stromschiene (4) verhindert.

2. Anordnung (1) nach Anspruch 1,
wobei der Fingerschutz (22) an einem in der Montageposition oberen Endbereich eine Ausnehmung (22a), insbesondere Kerbe, in welche ein Werkzeug (W) eingreift zum Überführen des Fingerschutzes (22) von der Montageposition in die Schutzposition aufweist.

3. Anordnung (1) nach Anspruch 2,
wobei die Ausnehmung (22a) einen Boden aufweist, wobei die Ausnehmung (22a) insbesondere nicht durchgängig durch den Fingerschutz (22) ausgebildet ist.

4. Anordnung (1) nach einem der vorstehenden Ansprüche,
wobei der Fingerschutz (22) eine der Anzahl der mindestens einen Stromschiene (4) oder einem Vielfachen der Anzahl der mindestens einen Stromschiene (4) entsprechende Anzahl an Langlöchern (22b) aufweist.

5. Anordnung (1) nach einem der vorstehenden Ansprüche, insbesondere nach Anspruch 4,
wobei der Fingerschutz (22) Ausnehmungen aufweist, wobei die Ausnehmungen, insbesondere neben den Langlöchern (22b), vorzugsweise symmetrisch entlang der vertikalen Richtung (V) neben den Langlöchern (22b), ausgebildet sind.

6. Anordnung (1) nach einem der vorstehenden Ansprüche,
wobei dem Fingerschutz (22) zwei oder mehr Gehäuseeinheiten (6) zugeordnet sind, wobei die zwei oder mehr Gehäuseeinheiten (6) parallel zueinander oder in der vertikalen Richtung (V) fluchtend angeordnet sind.

7. Anordnung (1) nach einem der vorstehenden Ansprüche,
wobei der Fingerschutz (22) einen elektrisch isolierenden Kunststoff, eine elektrisch isolierende Kunststoffmischung und/oder ein elektrisch isolierendes Keramikmaterial umfasst oder daraus besteht.

8. Anordnung (1) nach einem der vorstehenden Ansprüche,
wobei zwischen dem Fingerschutz (22) und der mindestens einen Gehäuseeinheit (6) mindestens ein, insbesondere mindestens ein jeweils einer Gehäuseeinheit (6) zugeordnetes, Montageelement (8) angeordnet ist, wobei der Fingerschutz (22) mittels des mindestens einen Montageelements (8) an der mindestens einen Stromschiene (4) befestigbar ist, und wobei die mindestens eine Gehäuseeinheit (6) werkzeuglos mit dem mindestens einen Montageelement (8) verbindbar oder verbunden ist.

9. Anordnung (1) nach Anspruch 8,
wobei die Gehäuseeinheit (6) über eine erste Paarung (10) von zusammenwirkenden Befestigungselementen (14a, 14b) hängend und über eine zweite Paarung (12) von als Clips-, Klemm-, Schnapp-, Riegel- oder Rastverbindungzusammenwirkenden Befestigungselementen (14c, 14d) mit dem Montageelement (8) verbunden ist.

10. Anordnung (1) nach einem der vorstehenden Ansprüche,
wobei der Fingerschutz (22) zumindest im Wesentlichen die Form einer rechteckigen Platte aufweist.

11. Anlage (100) zum Verteilen und/oder Wandeln von elektrischer Energie, wobei die Anlage (100) Folgendes aufweist:
ein Anlagengehäuse mit zumindest einer oberen Abdeckplatte;
mindestens zwei, insbesondere drei, Stromschienen (4), die parallel zueinander und beabstandet voneinander in dem Anlagengehäuse angeordnet sind; und
mindestens eine Anordnung (1) zum Befestigen an den mindestens zwei Stromschienen (4) nach einem der vorstehenden Ansprüche,
wobei die Anordnung (1) sich entlang der vertikalen Richtung (V) zumindest im Wesentlichen senkrecht zu der Erstreckungsrichtung der mindestens zwei Stromschienen (4) erstreckt.

12. Anlage (100) nach Anspruch 11,
wobei der Fingerschutz (22) an einen vorhandenen Bauraum der Anlage (100) anpassbar ist.

13. Anlage (100) nach Anspruch 11 oder 12,
wobei ein oberes Ende des Fingerschutzes (22) in der Schutzposition maximal 10 mm, insbesondere maximal 5 mm, von einer über der Anordnung (1) angeordneten Komponente, insbesondere der oberen Abdeckplatte, beabstandet ist.

14. Anlage (100) nach einem der Ansprüche 11 bis 13,
wobei der Fingerschutz (22) das Anlagengehäuse, insbesondere in einer zu der vertikalen Richtung (V) und zu der Erstreckungsrichtung der Stromschienen (4) senkrechten Tiefenrichtung (T), in einen Stromschienenraum, in welchem die mindestens zwei Stromschienen (4) angeordnet sind, und einen Einsetzraum unterteilt, in welchem die mindestens eine Gehäuseeinheit (6) angeordnet ist.
